# EUROPÄISCHE PATENTSCHRIFT

(11) **EP 2 080 544 B1**
(45) Veröffentlichungstag und Bekanntmachung des Hinweises auf die Patenterteilung: **01.12.2010**
(21) Anmeldenummer: 07123598.0
(22) Anmeldetag: 19.12.2007
(51) Int. Cl.: B01D 1/20, C01B 15/00, C11D 3/39, C11D 17/00

(54) **Verfahren zur Herstellung von umhüllten Natriumpercarbonatpartikeln**
Method for manufacturing coated sodium percarbonate particles
Procédé de fabrication de particules de percarbonate de sodium enrobées

(43) Veröffentlichungstag der Anmeldung: 22.07.2009
(73) Patentinhaber: Evonik Degussa GmbH, 45128 Essen (DE)
(72) Erfinder: Leininger, Stefan, 63505, Langenselbold (DE); Scheibe, Michael, 79618, Rheinfelden (DE); Jakob, Harald, 63594, Hasselroth (DE)

(56) Entgegenhaltungen:
- EP-A- 1 612 186
- WO-A-2006/003155
- DE-A1- 2 417 572
- DE-A1- 19 544 293

## Beschreibung

Gegenstand der Erfindung ist ein Verfahren zur Herstellung von umhüllten Natriumpercarbonatpartikeln, bei dem eine Natriumsulfat enthaltende wässrige Lösung auf Natriumpercarbonatpartikel in einer Wirbelschicht aufgesprüht und gleichzeitig Wasser verdampft wird, wobei zur Herstellung der Natriumsulfat enthaltenden wässrigen Lösung Natriumsulfat und Natriumpercarbonat-haltiger Staub verwendet wird.

Natriumpercarbonat wird zunehmend als bleichwirksamer Bestandteil in Waschmitteln und Reinigungsmitteln eingesetzt. Natriumpercarbonat muss für diese Anwendung eine ausreichende Lagerbeständigkeit in Waschmittel- und Reinigungsmittelzubereitungen aufweisen, da es sonst bei der Lagerung der Waschmittel und Reinigungsmittel zu einem unerwünschten Verlust an Aktivsauerstoff und damit an Bleichwirkung kommt. Natriumpercarbonat ist feuchtigkeitsempfindlich und zersetzt sich in Waschmittel- und Reinigungsmittelzubereitungen bei Einwirkung von Feuchtigkeit unter Verlust von Aktivsauerstoff. Deshalb wird Natriumpercarbonat zur Herstellung von Waschmitteln oder Reinigungsmitteln üblicherweise in umhüllter Form eingesetzt, wobei die Hüllschicht die Einwirkung von Feuchtigkeit auf die umhüllten Natriumpercarbonatpartikel verhindert.

DE 2 417 572 offenbart die Stabilisierung von Natriumpercarbonat durch eine Umhüllung aus einem Mischsalz von Natriumcarbonat und Natriumsulfat. Die Mischsalze weisen dabei ein Molverhältnis von Natriumcarbonat zu Natriumsulfat im Bereich von 0,3:1 bis 3:1 auf. Die Umhüllung wird durch Aufsprühen einer wässrigen Lösung von Natriumcarbonat und Natriumsulfat auf Natriumpercarbonatpartikel und gleichzeitiges Verdampfen von Wasser aufgebracht. Das Aufsprühen kann in einer Wirbelschicht erfolgen. Mit der Umhüllung aus einem Mischsalz von Natriumcarbonat und Natriumsulfat wird eine bessere Stabilisierung erreicht als mit einer Umhüllung, die nur aus Natriumcarbonat oder nur aus Natriumsulfat besteht.

WO 97/19890 offenbart die Stabilisierung von durch Wirbelschichtgranulation erhältlichen Natriumpercarbonatpartiklen durch eine Umhüllung aus Natriumsulfat, die durch Aufsprühen einer wässrigen Lösung von Natriumsulfat auf die Natriumpercarbonatpartikel in einer Wirbelschicht und gleichzeitiges Verdampfen von Wasser aufgebracht wird. Durch die Verwendung von durch Wirbelschichtgranulation erhältlichem Natriumpercarbonat wird mit Natriumsulfat allein die gleiche Stabilisierungswirkung erzielt, wie mit einem Mischsalz aus Natriumcarbonat und Natriumsulfat. Die mit Natriumsulfat umhüllten Natriumpercarbonatpartikel weisen gegenüber den mit einem Mischsalz aus Natriumcarbonat und Natriumsulfat umhüllten Partikeln eine bessere Silierbarkeit auf.

WO 2006/003155 beschreibt umhüllte Natriumpercarbonatpartikel, die in der Hüllschicht zusätzlich zu einem Hüllmittel noch kleine Natriumpercarbonatpartikel mit einem mittleren Durchmesser von weniger als 100 µm enthalten. Beschrieben ist außerdem ein Verfahren zur Herstellung solcher Partikel, bei dem zur Herstellung der Hüllschicht auf die Partikel gleichzeitig eine Lösung oder Suspension des Hüllmittels sowie die kleinen Natriumpercarbonatpartikel aufgebracht werden. Als kleine Natriumpercarbonatpartikel kann dabei ein Natriumpercarbonat-haltiger Staub eingesetzt werden, der mit einem Filter oder Zyklon aus dem Abgas eines zur Trocknung von Natriumpercarbonat eingesetzten Wirbelschichttrockners abgetrennt wurde.

Bei dem Aufsprühen einer Lösung von Natriumsulfat in einer Wirbelschicht kann es nicht nur zur Bildung von staubförmigem Natriumsulfat, sondern durch den Abrieb von Partikeln in der Wirbelschicht auch zur Bildung von Natriumpercarbonat-haltigem Staub kommen, der mit dem Fluidisierungsgas aus der Wirbelschicht ausgetragen wird. Dieser Natriumpercarbonat-haltige Staub kann von 50 bis 80 Gew.-% Natriumpercarbonat enthalten, wobei der Rest im Wesentlichen Natriumsulfat ist. Ein solcher Natriumpercarbonat-haltiger Staub genügt nicht den Anforderungen für eine Verwendung in Waschmitteln.

In ähnlicher Weise kommt es bei der Herstellung von Natriumpercarbonat durch Aufbaugranulation aus einer Natriumcarbonatlösung und wässrigem Wasserstoffperoxid in einer Wirbelschicht zur Bildung von Natriumpercarbonat-haltigem Staub, der mit dem Fluidisierungsgas aus der Wirbelschicht ausgetragen wird. Dieser Natriumpercarbonat-haltige Staub besteht im Wesentlichen aus Natriumpercarbonat und kann daneben noch geringe Mengen an die Stabilität von Natriumpercarbonat erhöhenden Additiven enthalten. Auch dieser Natriumpercarbonat-haltige Staub genügt nicht den Anforderungen für die Verwendung in Waschmitteln.

Schließlich kann es auch bei der pneumatischen Förderung von Natriumpercarbonatpartikeln durch Abrieb von den Partikeln oder durch Bruch von Partikeln zur Bildung von Natriumpercarbonat-haltigem Staub kommen, der sich nicht mehr für die Verwendung in Waschmitteln eignet.

Es wurde nun gefunden, dass sich solcher Natriumpercarbonat-haltiger Staub in Kombination mit Natriumsulfat vorteilhaft für die Umhüllung von Natriumpercarbonatpartikeln verwenden lässt und so in ein Herstellverfahren für Natriumpercarbonatpartikel für Wasch- und Reinigungsmittelzubereitungen zurückgeführt werden kann.

Gegenstand der Erfindung ist deshalb ein Verfahren zur Herstellung von umhüllten Natriumpercarbonatpartikeln durch Aufsprühen einer Natriumsulfat enthaltenden wässrigen Lösung auf Natriumpercarbonatpartikel in einer Wirbelschicht und gleichzeitiges Verdampfen von Wasser, bei dem zur Herstellung der Natriumsulfat enthaltenden wässrigen Lösung Natriumsulfat und Natriumpercarbonat-haltiger Staub verwendet wird.

Die im erfindungsgemäßen Verfahren eingesetzten Natriumpercarbonatpartikel bestehen vorzugsweise im Wesentlichen aus Natriumcarbonat-Perhydrat der Zusammensetzung 2 Na₂CO₃ · 3 H₂O₂. Sie können darüber hinaus noch geringe Mengen an bekannten Stabilisatoren für Persauerstoffverbindungen, wie zum Beispiel Magnesiumsalze, Silikate, Phosphate und/oder Chelatkomplexbildner, wie Phosphonate, enthalten. Der Anteil von Natriumpercarbonat an den Natriumpercarbonatpartikeln beträgt vorzugsweise mehr als 80 Gew.-% und besonders bevorzugt mehr als 95 Gew.-%. Der Anteil an organischen Kohlenstoffverbindungen beträgt vorzugsweise weniger als 1 Gew.-%, besonders bevorzugt weniger als 0,1 Gew.-%. Vorzugsweise enthalten die eingesetzten Natriumpercarbonatpartikel geringe Mengen an Additiven, die auf den Aktivsauerstoffgehalt stabilisierend wirken, wobei der Anteil an stabilisierenden Additiven vorzugsweise weniger als 2 Gew.-% beträgt. Als stabilitätserhöhende Additive werden vorzugsweise Magnesiumsalze, Wasserglas, Stannate, Pyrophosphate, Polyphosphate, Polyacrylate, sowie Chelatkomplexbildner aus der Reihe der Hydroxycarbonsäuren, Aminocarbonsäuren, Aminophosphonsäuren, Phosphonocarbonsäuren und Hydroxyphosphonsäuren sowie deren Alkalimetall-, Ammonium- oder Magnesiumsalze verwendet. In einer besonders bevorzugten Ausführungsform enthalten die Natriumpercarbonatpartikel als stabilisierendes Additiv ein Alkalimetallsilikat, vorzugsweise Wasserglas mit einem SiO₂/Na₂O-Modul im Bereich von 1 bis 3, in einer Menge von 0,1 bis 1 Gew.-%. In der am meisten bevorzugten Ausführungsform enthalten die Natriumpercarbonatpartikel zusätzlich zu dieser Menge an Alkalimetallsilikat noch eine Magnesiumverbindung in einer Menge von 50 bis 2000 ppm Mg²⁺.

Die im erfindungsgemäßen Verfahren eingesetzten Natriumpercarbonatpartikel können nach einem der bekannten Herstellverfahren für Natriumpercarbonat hergestellt werden. Ein geeignetes Herstellungsverfahren für Natriumpercarbonat ist die Kristallisation von Natriumpercarbonat aus wässrigen Lösungen von Wasserstoffperoxid und Natriumcarbonat, wobei die Kristallisation sowohl in Gegenwart, als auch in Abwesenheit eines Aussalzungsmittels durchgeführt werden kann, wozu beispielhaft auf EP-A 0 703 190 und DE 2 744 574 verwiesen wird. Nach dem Kristallisationsverfahren in Gegenwart eines Aussalzungsmittels hergestellte Natriumpercarbonatpartikel können noch geringe Mengen des verwendeten Aussalzungsmittels, wie z.B. Natriumchlorid enthalten. Ebenfalls geeignet ist die Wirbelschicht-Aufbaugranulation durch Aufsprühen von wässriger Wasserstoffperoxidlösung und wässriger Sodalösung auf Natriumpercarbonat-Keime in einer Wirbelschicht bei gleichzeitiger Verdampfung von Wasser, beispielhaft wird auf WO 95/06615 verwiesen. Weiterhin ist auch die Umsetzung von festem Natriumcarbonat mit einer wässrigen Wasserstoffperoxidlösung und nachfolgende Trocknung ein geeignetes Herstellverfahren.

In einer bevorzugten Ausführungsform sind die eingesetzten Natriumpercarbonatpartikel durch Aufbaugranulation aus Natriumcarbonat und Wasserstoffperoxid in einer Wirbelschicht erhältlich. Durch eine solche Aufbaugranulation in einer Wirbelschicht werden Natriumpercarbonatpartikel erhalten, die sich durch einen besonders dichten, schalenförmigen Aufbau und eine glattere Oberfläche von den nach anderen Herstellverfahren erhaltenen Natriumpercarbonatpartikeln unterscheiden. Nach dem erfindungsgemäßen Verfahren umhüllte Natriumpercarbonatpartikel, deren Kern durch Aufbaugranulation in einer Wirbelschicht hergestellt wurde, zeigen gegenüber Partikeln, deren Kern nach einem anderen Verfahren hergestellt wurde, eine verbesserte Lagerstabilität in Waschmittel- und Reinigungsmittelzubereitungen. Überraschenderweise zeigen nach dem erfindungsgemäßen Verfahren umhüllte Natriumpercarbonatpartikel, deren Kern durch Aufbaugranulation in einer Wirbelschicht hergestellt wurde, auch gegenüber Partikeln, deren Kern in gleicher Weise hergestellt wurde, die aber nur mit einer Lösung von Natriumsulfat umhüllt wurden, eine weiter verbesserte Lagerstabilität in Waschmittel- und Reinigungsmittelzubereitungen.

In dem erfindungsgemäßen Verfahren wird zur Herstellung der Natriumsulfat enthaltenden wässrigen Lösung Natriumsulfat und Natriumpercarbonat-haltiger Staub verwendet. Zur Herstellung der Lösung kann erst Natriumsulfat in Wasser gelöst werden und in dieser Lösung der Natriumpercarbonat-haltige Staub aufgelöst werden. In einer bevorzugten alternativen Ausführungsform wird in einem Wäscher aus einem Gasstrom Natriumpercarbonat-haltiger Staub abgeschieden und die dabei erhaltene wässrige Lösung zur Herstellung der Natriumsulfat enthaltenden wässrigen Lösung verwendet. Vorzugsweise wird dabei in dem Wäscher eine wässrige Waschlösung in einem Kreislauf geführt, in der sich der Natriumpercarbonat-haltige Staub unter Freisetzung von Natriumcarbonat und Wasserstoffperoxid löst. Der Wäscher kann dabei so betrieben werden, dass sich in der Waschlösung das freigesetzte Wasserstoffperoxid zu Wasser und Sauerstoff zersetzt.

In einer bevorzugten Ausführungsform wird im erfindungsgemäßen Verfahren Natriumpercarbonat-haltiger Staub verwendet, der aus dem Abgas einer Wirbelschicht abgetrennt wird, in der Natriumpercarbonat durch Aufbaugranulation aus Natriumcarbonat und Wasserstoffperoxid hergestellt wird.

In einer weiteren bevorzugten Ausführungsform wird im erfindungsgemäßen Verfahren Natriumpercarbonat-haltiger Staub verwendet, der aus dem Abgas der Wirbelschicht des erfindungsgemäßen Verfahrens abgetrennt wird. Dieser Natriumpercarbonat-haltige Staub enthält neben Natriumpercarbonat auch noch Natriumsulfat. Vorzugsweise liegt der Anteil an Natriumpercarbonat im Staub im Bereich von 50 bis 80 Gew.-% und der Anteil an Natriumsulfat im Bereich von 50 bis 20 Gew.-%. Mit dieser Ausführungsform lassen sich Verluste an Natriumsulfat beim Aufbringen der Hüllschicht auf die Natriumpercarbonatpartikel vermeiden und das eingesetzte Natriumsulfat vollständig für die Herstellung der Umhüllung verwenden.

In einer ebenfalls bevorzugten Ausführungsform wird im erfindungsgemäßen Verfahren Natriumpercarbonat-haltiger Staub verwendet, der aus einem Gasstrom einer pneumatischen Förderung von Natriumpercarbonatpartikeln abgetrennt wird. Mit dieser Ausführungsform lässt sich insbesondere der bei einer pneumatischen Förderung von umhüllten Natriumpercarbonatpartikeln entstehende Abrieb an Hüllmaterial wieder in das Verfahren zurückführen und zur Umhüllung wieder verwenden.

In dem erfindungsgemäßen Verfahren wird die Natriumsulfat enthaltende wässrige Lösung in einer Wirbelschicht auf Natriumpercarbonatpartikel aufgesprüht. Während des Aufsprühens der Natriumsulfat enthaltenden wässrigen Lösung wird vorzugsweise bereits der größte Teil des darin enthaltenen Wassers, insbesondere mehr als 90% des in der wässrigen Lösung enthaltenen Wassers, durch Wärmezufuhr verdampft, so dass während des Aufbringens der Hüllschicht nur ein geringer Teil des darunter liegenden Materials wieder angelöst wird und sich bereits während des Aufsprühens eine feste Hüllschicht ausbildet. Das Aufsprühen der wässrigen Lösung erfolgt vorzugsweise nach dem in EP-A 0 970 917 beschriebenen Verfahren, mit dem bereits mit geringen Mengen an Hüllschichtmaterial eine dichte Hüllschicht erreicht werden kann. Das Aufsprühen erfolgt vorzugsweise unter Zufuhr eines Trocknungsgases zur Wirbelschicht, so dass sich in der Wirbelschicht eine Temperatur im Bereich von 30 bis 90 °C, vorzugsweise 50 bis 70 °C, einstellt.

Natriumsulfat und Natriumpercarbonat-haltiger Staub werden vorzugsweise in solchen Mengen verwendet, dass die wässrige Lösung, die auf die Natriumpercarbonatpartikel aufgesprüht wird, Natriumsulfat und Natriumcarbonat in einem Gewichtsverhältnis im Bereich von 95 : 5 bis 75 : 25 enthält. Durch das Aufsprühen von Lösungen mit diesem Verhältnis von Natriumsulfat und Natriumcarbonat werden umhüllte Natriumpercarbonatpartikel erhalten, die gegenüber Natriumpercarbonatpartikeln mit einer Hüllschicht aus Natriumsulfat eine verbesserte Lagerstabilität in Wasch- und Reinigungsmittelzubereitungen aufweisen und gleichzeitig ein gute Silierbarkeit aufweisen.

In einer bevorzugten Ausführungsform enthält die unter Verwendung von Natriumsulfat und Natriumpercarbonat-haltigem Staub hergestellte wässrige Lösung insgesamt nicht mehr als 25 Gew.-% gelöste Salze. Während der Stand der Technik lehrt, zum Aufbringen einer Hüllschicht möglichst konzentrierte Lösungen der Hüllkomponenten zu verwenden um die zu Verdampfende Wassermenge gering zu halten, wurde überraschend gefunden, dass Natriumpercarbonatpartikel mit einer Hüllschicht, die durch Aufsprühen einer wässrigen Lösung mit nicht mehr als 25 Gew.-% gelösten Salzen hergestellt wurde, eine bessere Lagerstabilität in Waschmittel- und Reinigungsmittelzubereitungen aufweisen als Natriumpercarbonatpartikel, die durch Aufsprühen einer wässrigen Lösung mit einem höheren Gehalt an gelösten Salzen erhältlich sind.

## Patentansprüche

1. Verfahren zur Herstellung von umhüllten Natriumpercarbonatpartikeln durch Aufsprühen einer Natriumsulfat enthaltenden wässrigen Lösung auf Natriumpercarbonatpartikel in einer Wirbelschicht und gleichzeitiges Verdampfen von Wasser,
**dadurch gekennzeichnet,**
**dass** zur Herstellung der Natriumsulfat enthaltenden wässrigen Lösung Natriumsulfat und Natriumpercarbonat-haltiger Staub verwendet wird.

2. Verfahren nach Anspruch 1,
**dadurch gekennzeichnet,**
**dass** in einem Wäscher aus einem Gasstrom Natriumpercarbonat-haltiger Staub abgeschieden wird und die dabei erhaltene wässrige Lösung zur Herstellung der Natriumsulfat enthaltenden wässrigen Lösung verwendet wird.

3. Verfahren nach Anspruch 1 oder 2,
**dadurch gekennzeichnet,**
**dass** Natriumpercarbonat-haltiger Staub verwendet wird, der aus dem Abgas der Wirbelschicht abgetrennt wird.

4. Verfahren nach einem der Ansprüche 1 oder 2,
**dadurch gekennzeichnet,**
**dass** Natriumpercarbonat-haltiger Staub verwendet wird, der aus einem Gasstrom einer pneumatischen Förderung von Natriumpercarbonatpartikeln abgetrennt wird.

5. Verfahren nach einem der Ansprüche 1 oder 2,
**dadurch gekennzeichnet,**
**dass** Natriumpercarbonat-haltiger Staub verwendet wird, der aus dem Abgas einer Wirbelschicht abgetrennt wird, in der Natriumpercarbonat durch Aufbaugranulation aus Natriumcarbonat und Wasserstoffperoxid hergestellt wird.

6. Verfahren nach einem der Ansprüche 1 bis 5,
**dadurch gekennzeichnet,**
**dass** die wässrige Lösung Natriumsulfat und Natriumcarbonat in einem Gewichtsverhältnis im Bereich von 95 : 5 bis 75 : 25 enthält.

7. Verfahren nach einem der Ansprüche 1 bis 6,
**dadurch gekennzeichnet,**
**dass** die wässrige Lösung auf Natriumpercarbonatpartikel aufgesprüht wird, die durch Aufbaugranulation aus Natriumcarbonat und Wasserstoffperoxid in einer Wirbelschicht erhältlich sind.

8. Verfahren nach einem der Ansprüche 1 bis 7,
**dadurch gekennzeichnet,**
**dass** die wässrige Lösung nicht mehr als 25 Gew.-% gelöste Salze enthält.

## Claims

1. Process for producing coated sodium percarbonate particles by spray application of a sodium sulfate-containing aqueous solution onto sodium percarbonate particles in a fluidized bed and simultaneous evaporation of water,
**characterized in that**
the sodium sulfate-containing aqueous solution is prepared using sodium sulfate and sodium percarbonate-containing dust.

2. Process according to Claim 1,
**characterized in that**
sodium percarbonate-containing dust is separated from a gas stream in a scrubber and the aqueous solution obtained is used to prepare the sodium sulfate-containing aqueous solution.

3. Process according to Claim 1 or 2,
**characterized in that**
sodium percarbonate-containing dust removed from the offgas from the fluidized bed is used.

4. Process according to any one of Claims 1 or 2,
**characterized in that**
sodium percarbonate-containing dust removed from a gas stream from a pneumatic delivery of sodium percarbonate particles is used.

5. Process according to any one of Claims 1 or 2,
**characterized in that**
sodium percarbonate-containing dust removed from the offgas from a fluidized bed, in which sodium percarbonate is prepared by buildup granulation from sodium carbonate and hydrogen peroxide, is used.

6. Process according to any one of Claims 1 to 5,
**characterized in that**
the aqueous solution contains sodium sulfate and sodium carbonate in a weight ratio in the range from 95:5 to 75:25.

7. Process according to any one of Claims 1 to 6,
**characterized in that**
the aqueous solution is sprayed onto sodium percarbonate particles which are obtainable by buildup granulation from sodium carbonate and hydrogen peroxide in a fluidized bed.

8. Process according to any one of Claims 1 to 7,
**characterized in that**
the aqueous solution contains not more than 25% by weight of dissolved salts.

## Revendications

1. Procédé de production de particules de percarbonate de sodium enrobées, par pulverisation d'une solution aqueuse contenant du sulfate de sodium sur des particules de percarbonate de sodium dans un lit fluidisé et évaporation simultanée d'eau, **caractérisé en ce que** pour la production de la solution aqueuse contenant du sulfate de sodium, on utilise du sulfate de sodium et de la poussière contenant du percarbonate de sodium.

2. Procédé selon la revendication 1,
**caractérisé en ce que**
dans un laveur, on sépare de la poussière contenant du percarbonate de sodium d'un flux de gaz et on utilise la solution aqueuse ainsi obtenue pour la production de la solution aqueuse contenant du sulfate de sodium.

3. Procédé selon la revendication 1 ou 2,
**caractérisé en ce**
**qu'**on utilise de la poussière contenant du percarbonate de sodium qui est séparée des gaz d'échappement du lit fluidisé.

4. Procédé selon la revendication 1 ou 2,
**caractérisé en ce**
**qu'**on utilise de la poussière contenant du percarbonate de sodium qui est séparée d'un flux de gaz d'un transport pneumatique de particules de percarbonate de sodium.

5. Procédé selon la revendication 1 ou 2,
**caractérisé en ce**
**qu'**on utilise de la poussière contenant du percarbonate de sodium qui est séparée des gaz d'échappement d'un lit fluidisé, dans lequel est produit du percarbonate de sodium par granulation d'élaboration à partir de carbonate de sodium et de peroxyde d'hydrogène.

6. Procédé selon l'une quelconque des revendications 1 à 5,
**caractérisé en ce que**
la solution aqueuse contient du sulfate de sodium et du carbonate de sodium dans un rapport de poids de l'ordre de 95 : 5 à 75 : 25.

7. Procédé selon l'une quelconque des revendications 1 à 6,
**caractérisé en ce**
**qu'**on pulverise la solution aqueuse sur des particules de carbonate de sodium, qui sont susceptibles d'être obtenues par granulation d'élaboration à partir de carbonate de sodium et de peroxyde d'hydrogène dans un lit fluidisé.

8. Procédé selon l'une quelconque des revendications 1 à 7,
**caractérisé en ce que**
la solution aqueuse ne contient pas plus de 25 % en poids de sels dissous.
